# EUROPEAN PATENT APPLICATION

(11) **EP 1 503 124 A2**
(43) Date of publication of application: **02.02.2005**
(21) Application number: 04380157.0
(22) Date of filing: 21.07.2004
(51) Int. Cl.: F16L 3/26, H02G 3/38

(54) **Profile for fixing telephony strip holders and the like**

(30) Priority: 30.07.2003 ES 200301799
(71) Applicant: Hispano Mecano Electrica S.A., 08786 Capellades (Barcelona) (ES)
(72) Inventor: Pons Tort, Antoni, 08786 Capellades (Barcelona) (ES)
(74) Representative: Duran Moya, Luis-Alfonso

(57) **Abstract**

The extruded profile made of aluminium or other material is equipped with two wings which are symmetrical about a median-central plane, each of them having an open rectangular construction with one of their smaller sides being incomplete and the external adjacent larger side being extended in an extension at 90°, there being an intermediate wall for joining the two wings in a symmetrical arrangement for simultaneously defining multiple fixing points of telephony cases and the like in a symmetrical arrangement about the central plane of symmetry of the profile, and multiple support planes both sides of the intermediate joining wall, allowing simultaneous fixing of more than one strip holder case.

## Description

The present invention is intended to disclose a profile for fixing telephony strip holder cases and the like, which comprises original characteristics of novelty and inventive step.

There are currently different types of profiles for fixing the various telephony strip holder components or other diverse materials. The term "telephony strip" has to include the connecting components used for typical telephony applications as well as others which can extend to computer systems.

The concept of diverse materials includes all those intended to be fixed to a standardised rail, known on the market as DIN 35 rail corresponding to the standards DIN 46207/3, EN 50022 and UNE 21882.

The inventor's object was to rationalise the profiles for fixing the telephony strip holders and diverse material, so as to allow said components to be fixed in a single profile and thus facilitate rationalisation of assembly of said components.

The most important concept, which guided the inventor in developing the profile for fixing telephony strip holders and diverse material, was to allow different strip holders and other materials to be fixed in the same profile.

To achieve said object the inventor has developed a profile that is preferably extruded from aluminium, with a laminar construction which is symmetrical about a central plane and in which two zones of substantially rectangular open construction are distinguished by two adjoining sides, one of which is incomplete while the other has an outward extension of considerable size at a right angle. Said rectangular constructions are disposed symmetrically about a central plane and are joined by a perpendicular wall to the complete vertical sides of said rectangular constructions. There are thus multiple fixing points for the strip holders and other materials as well as various support planes above and below the joining wall. In particular, in a preferred version, the profile according to the invention has four support planes - two on one side of the joining wall and the other two on the other side - as well as four connecting zones of different width defined by the incomplete sides of the rectangular constructions, the lateral extensions of the other sides of said rectangular constructions and the external faces of the respective rectangular elements.

Recesses for self-tapping screws for fastening in the cabinets are disposed in the central part of the joining wall and in the edges of the extensions at right angles.

To assist understanding, there follow, by way of descriptive but non-limiting examples, some drawings of a profile produced according to the present invention.
Fig. 1 shows a cross-section of a profile produced according to the present invention.
Fig. 2 shows a detail in section of a part of said profile.
Fig. 3 shows the method of connecting a strip holder case.
Fig. 4 shows the strip holder case coupled to the profile according to the invention.
Fig. 5 and 6 show the respective presentation and coupling of a second case in the profile according to the invention.
Fig. 7 and 8 show respective representative views of the double coupling, from both sides, of the two different cases in the same profile.

As is shown in the figures, the profile according to the present invention comprises two substantially rectangular laminar constructions 1 and 2 of which one of the longer sides 3, 3' is complete while the other 4, 4' is interrupted approximately halfway along its length, having respective extensions 5, 5' at 90°. The other, smaller side 6, 6' is interrupted, preferably before halfway along its length, and the two rectangular elements are joined by a wall 7 perpendicular to the longer sides 3 and 3'.

In the central part of said wall 7, as well as in the angles formed between the two short sides 4, 4' and their extensions 5, 5', there are defined recesses for self-tapping screws for joining to cabinets, with arms in the form of respective pincers for resilient fastening thereof, as indicated by reference numerals 8, 9 and 10.

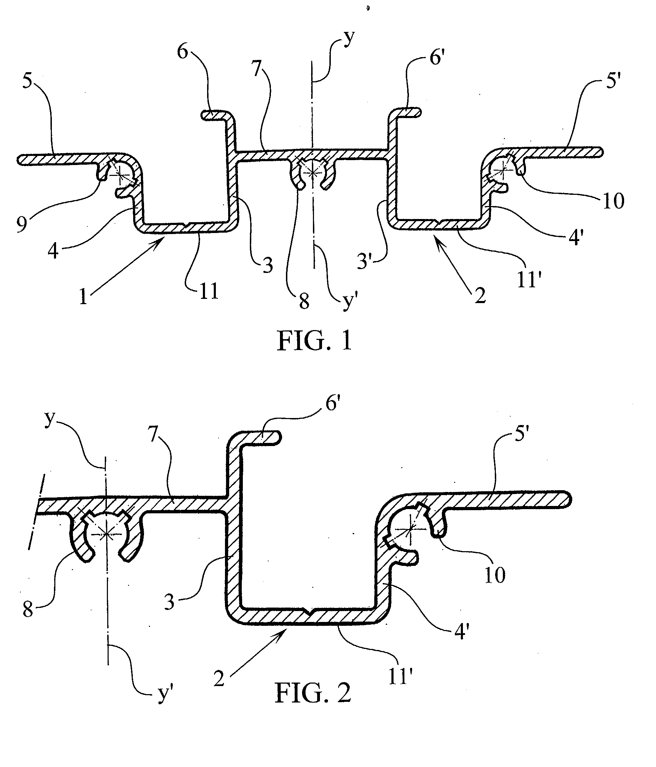

As illustrated, the rectangular constructions 1 and 2 are disposed symmetrically about the central plane of symmetry y, y', shown in Fig. 1.

This constitution provides multiple support planes and symmetrical fixing zones for the different types of strip holders and similar components. Thus, for example, four support planes are respectively defined - those defined by the shorter incomplete sides 6, 6', the intermediate wall 7, the extensions 5, 5' and the lower shorter sides 11, 11' of the rectangular constructions.

Five fixing zones, which are symmetrical about the plane y, y', are defined in the same way, namely: ends of the extensions 5, 5'; ends of the short sides 6, 6'; upper external part of the long sides 3, 3'; external faces of the lower part of the respective long sides 3, 3', and external faces of the sides 4, 4'.

A very light and extremely versatile profile is thus achieved for assembly of electrical components.

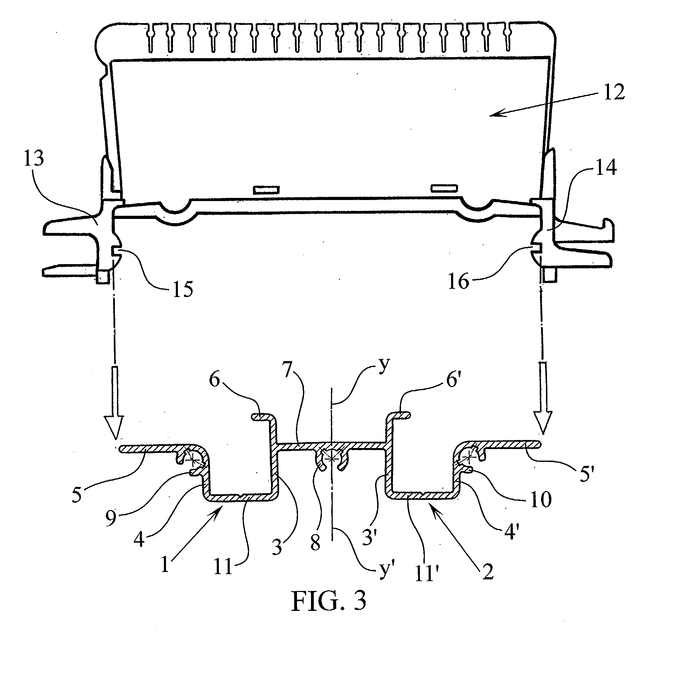

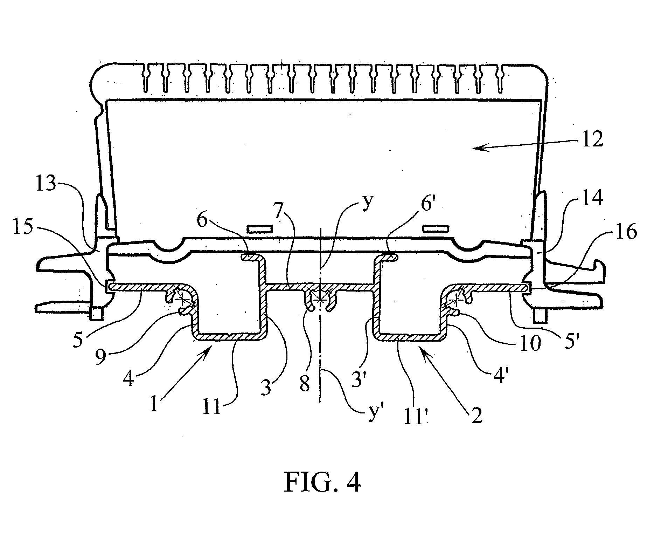

Fig. 3 shows an example in which a strip holder case 12, equipped with hooks 13 and 14 in its lower part, with coupling grooves 15 and 16, can be coupled to the ends of the wings 5 and 5', as can be seen in Fig. 4.

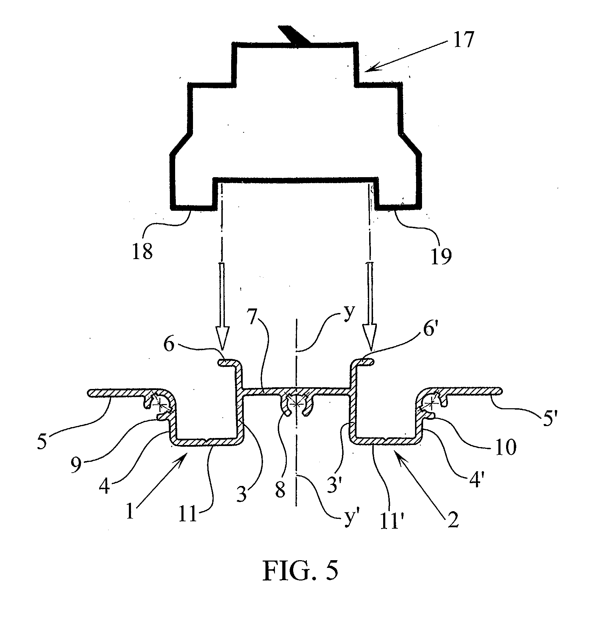

Fig. 5 shows an example of a second type of case 17 which can be coupled to the ends of the incomplete shorter sides 6 and 6' by means of the internal faces of the extensions 18 and 19 of said case.

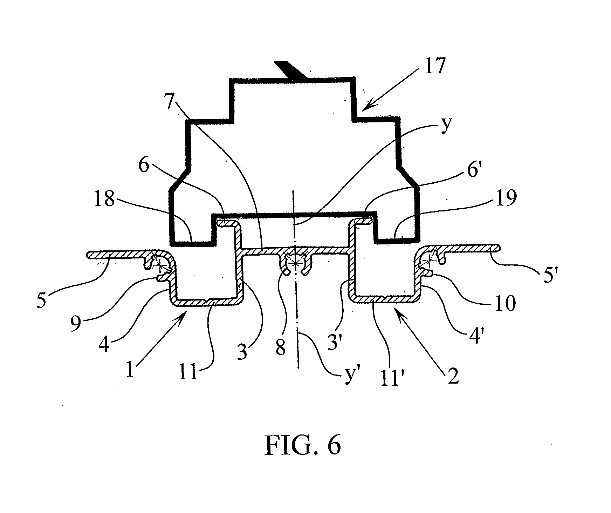

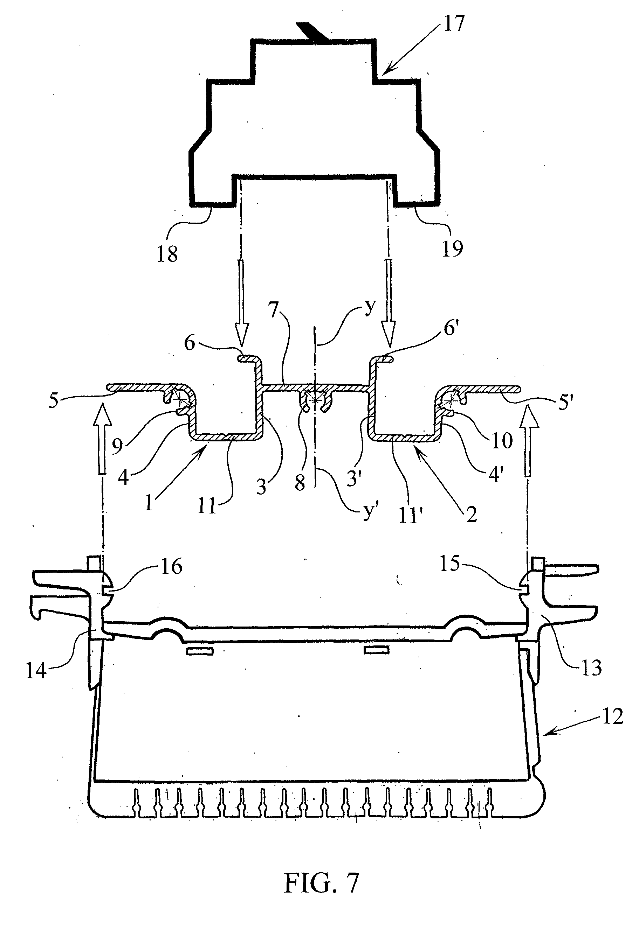

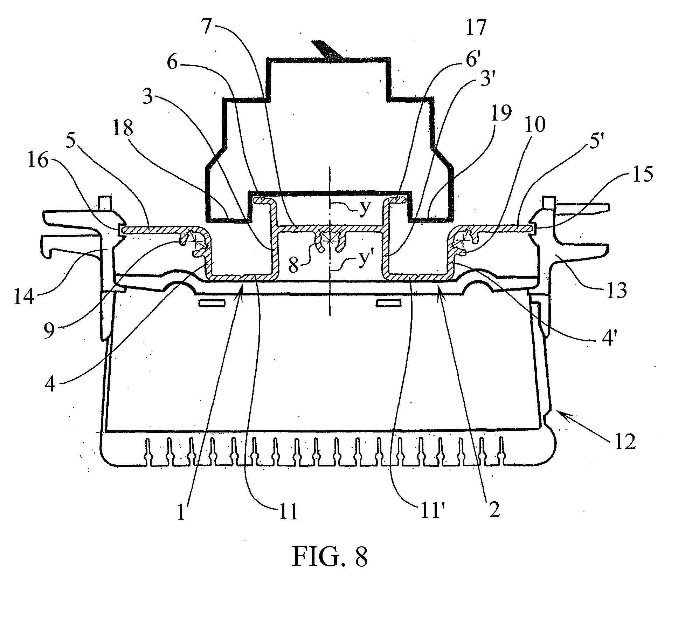

One of the characteristics of the profile according to the present invention consists in the possibility of simultaneously assembling two cases in the same profile, as shown in Fig. 7 and 8, in which the same reference numerals have been used as in the illustrations in Fig. 3 to 6. In said embodiment the incorporation of the two types of different case 12 and 17 in the same profile is shown in Fig. 8.

As already mentioned, this profile also has the recesses, preferably parted, of the type 8, 9 and 10 for fixing to the corresponding cabinets by means of self-tapping screws and other similar means. The recesses 9 and 10 are intended for fixing the profile of large capacity telephony cabinets, and the intermediate point 8 is intended for fixing the profile to small- and medium-capacity telephony cases.

As can be appreciated, a very simple, highly versatile means is provided by the profile according to the present invention, which allows cases and electrical components to be assembled in cabinets in many different ways, while avoiding the multiplicity of components which are currently required to carry out said assembly.

## Claims

1. Profile for fixing telephony strip holders and the like, **characterised in that** it comprises an extruded profile made of aluminium or other material, which is equipped with two wings which are symmetrical about a median-central plane, each of them having an open rectangular construction with one of their smaller sides being incomplete and the external adjacent larger side being extended in an extension at 90°, there being an intermediate wall joining the two wings in a symmetrical arrangement for simultaneously defining multiple fixing points of telephony cases and the like in a symmetrical arrangement about the central plane of symmetry of the profile, and multiple support planes on both sides of the intermediate joining wall, allowing simultaneous fixing of more than one strip holder case or the like to both sides of the central wall.

2. Profile for fixing telephony strip holders and the like according to claim 1, **characterised by** the arrangement of recesses for self-tapping screws for fixing the profile to switchgear cabinets, in the central part of the wall joining the two rectangular wings and in the edges of the extensions at right angles to the respective rectangular wings.
